Europäisches Patentamt

(19) European Patent Office

Office européen des brevets

(11) Publication number : **0 532 204 A1**

## (12) EUROPEAN PATENT APPLICATION

(21) Application number : 92307806.7

(22) Date of filing : 27.08.92

(51) Int. Cl.$^5$ : **G02F 1/35,** G02F 1/015,
G02F 1/37, G02F 3/00

(30) Priority : 05.09.91 US 755275

(43) Date of publication of application :
17.03.93 Bulletin 93/11

(84) Designated Contracting States :
DE FR GB

(71) Applicant : AMERICAN TELEPHONE AND
TELEGRAPH COMPANY
32 Avenue of the Americas
New York, NY 10013-2412 (US)

(72) Inventor : **Capasso, Federico**
42 Westbrook Road
Westfield, New Jersey 07090 (US)
Inventor : Yi-Cho, Alfred
11 Kenneth Court
Summit, New Jersey 07901 (US)
Inventor : Sirtori, Carlo
2 Hillside Avenue
Summit, New Jersey 07901 (US)
Inventor : West, Lawrence Camest
4 Quail Hill
Clarksburg, New Jersey 08510 (US)

(74) Representative : Watts, Christopher Malcolm
Kelway, Dr. et al
AT & T (UK) Ltd. 5, Mornington Road
Woodford Green Essex, IG8 0TU (GB)

(54) Article comprising an electro-optic quantum well device.

(57)    Electro-optic semiconductor devices that comprise two strongly coupled quantum wells (202, 204) of unequal thickness are disclosed asymmetric coupled quantum wells. Typically devices according to the invention comprise a multiplicity of such strongly coupled wells, a given pair of coupled wells separated from the adjacent pairs by means of relatively thick barrier layers (e.g., 201, 205). Associated with a coupled pair are first and second energy levels (22, 23) of energy $E_1$ and $E_2$ respectively, and optionally, a third energy level of (24) energy $E_3$, with the quantum well thicknesses selected such that $E_1 < E_2 < E_3$. Application of pump radiation of frequency $\nu$ to such a device (71) can result in relatively efficient generation of second harmonic radiation if the layer thicknesses are selected such that for some appropriate bias voltage across the layer structure the condition $h\nu = E_2 - E_1 = E_3 - E_2$ is substantially satisfied. In a further embodiment (61) a three-level device according to the invention can serve as an all-optical modulator. A device according to the invention that requires only first and second energy levels can serve as a fast modulator/switch of radiation of frequency $\nu$, with the device being switched into and out of the condition $\Delta E_{12} = h\nu$ by means of a bias voltage. In a further embodiment, devices according to the invention can serve as optical logic gates.

FIG. 2

## Field of the Invention

This application pertains to the field of quantum well semiconductor devices.

## Background of the Invention

Quantum well (QW) semiconductor devices are well known (see, for instance, F. Capasso, Science, Vol. 235, p. 172). It is also known that second order non-linear effects such as second harmonic generation (SHG) can be associated with asymmetric quantum wells. See, for instance, M. M. Fejer et al., Physical Review Letters, Vol. 62, p. 1041, (1989), who report SHG in AlGaAs/GaAs QW structures. SHG using a pump radiation of approximate wavelength 10μm is of interest since there are no efficient narrow-band sources for radiation of approximate wavelength 5μm.

Prior art QW structures used for SHG comprise uncoupled, compositionally asymmetric wells [e.g., S. J. B. Yoo et al., Applied Physics Letters, Vol. 58, p. 1724, (1991), and E. Rosencher et al. Electronics Letters, Vol. 25, p. 1063 (1989)], or compositionally symmetric wells, with the asymmetry induced by an applied field (M. M. Fejer et al., op. cit.).

E. Rosencher et al., Applied Physics Letters, Vol. 56(19), p. 1822 (1990), report a QW structure adapted for optical rectification, the structure comprising two (essentially uncoupled) GaAs quantum wells of slightly unequal thickness (7 and 5 nm, respectively) separated by a thick barrier layer of intermediate height (24 nm $Al_{.18}Ga_{.82}As$). R. P. G. Karunasiri et al., IEEE Electron Device Letters, Vol. 11 (5), p. 227, disclose a tunable IR modulator and switch that uses step quantum wells.

There are disadvantages associated with the prior art QW structures. For instance, in some material systems it is difficult to produce compositionally stepped or graded layers of intermediate compositions, whereas SHG by means of field-induced asymmetry is relatively inefficient.

In view of the desirability of an efficient radiation source and/or modulator in the mid-infrared region, especially of such a device that is capable of fast switching, it would be desirable to have available a QW device that can be readily embodied in In-containing and other semiconductor systems, and that in one embodiment can serve as a fast source of IR radiation, and that can, in other embodiments, serve as a fast modulator of IR radiation capable of a high on/off ratio. This application discloses such a device.

## Summary of the Invention

The invention is defined by the claims. In a broad aspect an article according to the invention includes a QW semiconductor device that can be tuned by means of an applied electric field to exhibit large second order non-linear effects and comprises two strongly coupled quantum wells of unequal thickness, typically a multiplicity of such coupled pairs of quantum wells. Devices according to the invention can exemplarily serve as optical modulators and/or as fast narrow band IR radiation sources, typically in the approximate wavelength range 3 - 100μm.

A significant feature of the invention is the use of an asymmetric heteroepitaxial semiconductor layer combination that comprises, in sequence, a first barrier layer, a first QW layer of thickness $t_{w1}$, a second barrier layer of thickness $t_b$, a second QW layer of thickness $t_{w2}$, and a third barrier layer. Associated with each of the layers is a band edge (conduction band edge or valence band edge, as the case may be), with the band edge of each of the barrier layers being "higher" in energy than the band edge of each of the QW layers. "Higher" is to be understood in relation to the relevant mobile charge carriers. For instance, if the relevant mobile charge carriers are holes than the relevant band edges are valence band edges, and the barrier layer band edges are "higher" in the conventionally negative direction, as will be apparent to those skilled in the art.

In a layer combination according to the invention at least one of the layers comprises dopant atoms that are adapted to provide mobile charge carriers to at least one of the QW layers of the layer combination. In currently preferred embodiments the mobile charge carriers are electrons, because in most semiconductor materials of interest herein mobile electrons have significantly lower effective mass than holes. Exemplarily the dopant level is in the approximate range $10^{17}$ - $5 \times 10^{18}$ cm$^{-3}$, with the dopant concentration typically being higher in modulators than in second harmonic generators.

Articles according to the invention comprise means for applying an electric field across (i.e., in a direction perpendicular to) the layer combination, and further comprise means for coupling electromagnetic radiation (of wavelength λ) into the semiconductor body that comprises the layer combination. Those skilled in the art are familiar with such means.

A significant feature of the invention is the selection of layer thicknesses $t_{w1}$, $t_{w2}$ and $t_b$, with $t_{w1} > t_{w2}$, and $t_b$ <20 nm, typically <10 nm, preferably <5 nm. Furthermore, $t_b$ is selected such that mobile charge carriers can readily tunnel from one to the other QW of the layer combination. Furthermore, $t_{w1}$ and $t_{w2}$ are selected such that there are associated with the first and second QWs first and second energy levels for the mobile charge carriers, respectively, with the first and second energy levels being "higher" in energy than the first QW band edge by an amount $E_1$ and $E_2$, respectively, with $E_2 > E_1$, and with $E_2 - E_1 = \Delta E_{12}$ differing from hν (h is Planck's constant, and $\nu = c/\lambda$, where c is the speed of light) by at most $0.3\Delta E_{12}$. The

latter condition inter alia ensures that the device can be tuned to resonance with a moderate applied field.

The thicknesses of the first and third barrier layers are selected such that essentially none of said mobile charge carriers can tunnel through any of these barrier layers. Exemplarily, their thickness is selected such that the tunneling probability is less than 5%.

Associated with a layer combination according to the invention is a dipole matrix element $<z_{12}$ that is associated with the mobile charge carrier transition from the first to the second energy level. Significantly, $t_{w1}$, $t_{w2}$ and $t_b$ are selected such that $<z_{12}$ is greater than 0.3 nm, preferably greater than 0.5 or even 1 nm. For smaller values of $<z_{12}$ the transition probability for the $1 \rightarrow 2$ transition is too low to be useful in many devices.

In many articles according to the invention the semiconductor body that comprises the above-described combination of layers is a III-V semiconductor body, with the materials of the layer combination selected such that the three barrier layers have equal composition, and the two QW layers also have equal composition. Furthermore, in articles according to the invention the semiconductor body typically does not contain a single combination of layers but instead contains a multiplicity (e.g., up to 40 or even more) of such combinations. Typically the combinations are essentially identical, and typically are spaced periodically. In such a periodic structure a first barrier layer can be thought to be shared by a given layer combination and by one of its two neighboring combinations, and the third barrier layer can be thought to be shared by the given layer combination and its other neighboring combination. This picture holds for all but the two outermost layer combinations of a periodic structure containing a multiplicity N of layer combinations, as will be evident to those skilled in the art. Exemplarily, the quantity $N(t_{w1} + t_{w2} + t_b)$ is in the range 0.5- 1.5 μm.

In many embodiments of the invention, (including second harmonic radiation sources and some modulators), $t_{w1}$, and $t_{w2}$ are selected such that there is associated with the first QW layer a third energy level for the mobile charge carriers that is "higher" in energy than the first QW band edge by an amount $E_3 > E_2$, with $E_3 - E_2 = \Delta E_{23}$ differing also from hν by at most $0.3\Delta E_{23}$. Associated with this layer combination are dipole matrix elements $<z_{23}$ and $<z_{31}$ that pertain to mobile charge carrier optical transitions from the second to the third ($2 \rightarrow 3$) and the third to the first ($3 \rightarrow 1$) energy level, respectively. Desirably, the layer thicknesses are selected such that each of $<z_{23}$ and $<z_{31}$ is greater than 0.3 nm, preferably greater than 0.5 or even 1 nm. In preferred embodiments the layer structure is selected such that the product of $<z_{12}$, $<z_{23}$, and $<z_{31}$ is greater than 75% (preferably essentially 100%) of the mathematical maximum of the product, thereby ensuring high efficiency SHG. Layer combinations of the above described type can be brought into resonance with the coupled-in radiation of wavelength λ by means of an applied electric field, and SHG thus can be rapidly switched on or off. In another embodiment the layer structure can be field-tuned such that the $1 \rightarrow 2$ transition is in or out of resonance with the coupled-in radiation of wavelength λ. Such an embodiment can serve as a fast modulator of radiation of wavelength λ. In a still further embodiment the device can modulate radiation of wavelength λ in accordance with pump radiation of wavelength $\lambda_p$. Such an optically controlled modulator can serve as an optical logic gate.

Uses for devices according to the invention include narrow band IR radiation sources and modulators of IR radiation, exemplary for communications systems.

## Brief Description of the Drawings

FIG. 1 schematically shows the conduction and valence band edges for a portion of a layer structure according to the invention;

FIG. 2 schematically depicts the conduction band edge of a portion of a layer structure according to the invention, and also depicts the energy levels and wave functions;

FIG. 3 shows data on the absorbance of an exemplary device according to the invention as a function of wave number;

FIG. 4 shows data on second harmonic power emitted by an exemplary device according to the invention as a function of pump power;

FIG. 5 gives results of an exemplary calculation of the dependence of $\Delta E_{12}$, $\Delta E_{23}$ and $\Delta E_{13}$ on bias voltage;

FIG. 6 schematically depicts a particular embodiment of the inventive article, namely, a modulator;

FIG. 7 shows schematically a further particular embodiment, namely, a second harmonic radiation source;

FIG. 8 shows exemplary data on the second order susceptibility of a layer structure according to the invention as a function of bias voltage, for several pump radiation frequencies; and

FIG. 9 schematically depicts an exemplary article according to the invention.

## Detailed Description of Some Preferred Embodiments

The second order susceptibility $|\chi_{2v}^{(2)}|$ is a significant parameter for many non-linear devices. For a three-level QW structure as described herein, this susceptibility can be approximated by the following

expression:

$$\chi_{2\nu}^{(2)} = (e^3 n/\varepsilon_o)(<z_{12}<z_{23}<z_{31}) \times [(h\nu - \Delta E_{12}-i\Gamma)(2h\nu - \Delta E_{31} - i\Gamma)]^{-1}$$

In this expression n is the charge density, e is the electron charge, $\varepsilon_o$ is the permittivity constant, $\Gamma$ is the level broadening parameter, h is Planck's constant, and $\nu$ is the frequency of the incident radiation.

The second order susceptibility can be maximized if $\Delta E_{12} = h\nu$ and $\Delta E_{31} = 2h\nu$. This can be achieved if $\Delta E_{12}$ can be made equal to $\Delta E_{23}$, and if $h\nu$ is at least approximately equal to $\Delta E_{12}$. The susceptibility will have its highest possible value if the above resonance condition is met and if the product of the dipole matrix elements has its largest possible value (for a given material system). Although attainment of this absolute maximum may be desirable in many cases it is not a requirement for the practice of the invention.

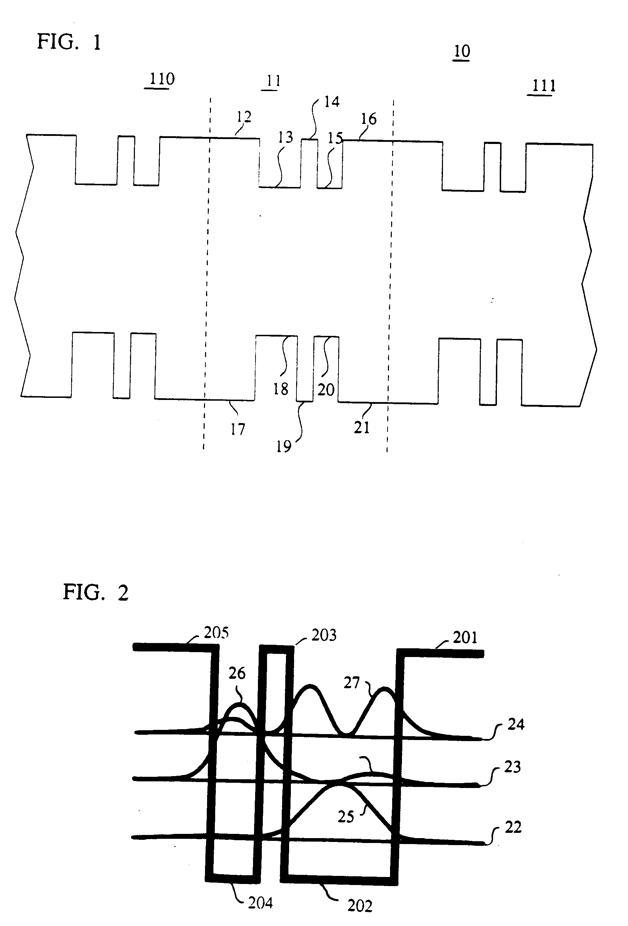

FIG. 1 schematically depicts a portion of the energy level diagram of an exemplary periodic layer structure (10) according to the invention, showing a given layer combination (11) and the two neighboring combinations (110 and 111). The given combination contains first, second and third barrier layers with conduction band edges 12, 14 and 16, respectively, and valence band edges 17, 19 and 21, respectively. It also contains first and second QW layers, with conduction band edges 13 and 15, respectively, and valence band edges 18 and 20, respectively. It will be appreciated that the first and third barrier layers can be considered shared between adjacent layer combinations, and that the band edges that are shown of equal height are not necessarily of equal height. It will also be understood that the invention can be embodied in articles wherein the combination of layers contains more than the above described two quantum wells.

FIG. 2 schematically shows a portion of the energy level diagram of a combination of layers according to the invention. In particular, the figure shows the conduction band edges of first, second and third barrier layers 201, 203 and 205, and the conduction band edges of first and second QW layers 202 and 204. It further shows first, second and third energy levels 22, 23 and 24, respectively, and the modulus square of the wave functions 25, 26 and 27. It will be appreciated that level 24 need not be below the conduction band edge of layers 201 and/or 203, as shown, although this will be advantageous in many cases.

In a particular exemplary embodiment, the periodic QW structure was grown epitaxially on a semi-insulating (100) InP substrate by MBE. The structure consists of 40 coupled well periods, separated from each other by 15 nm undoped AlInAs barriers (first and third barrier layers). Undoped 10 nm GaInAs spacer layers separate the multiquantum well structure from $n^+$ 400 nm thick GaInAs layers. Each period of the periodic structure comprises a 6.4 nm GaInAs first QW, doped with Si (n $\sim$ 2x10$^{17}$ cm$^{-3}$), separated from the 2.8 nm undoped GaInAs second QW by 1.6 nm undoped AlInAs second barrier layer. Specifically, the compositions are $Al_{0.48}In_{0.52}As$ and $Ga_{0.47}In_{0.53}As$. In the particular embodiment of the invention $E_1$, $E_2$ and $E_3$ were 92, 228 and 334 meV, respectively, giving separations $\Delta E_{12}$ and $\Delta E_{23}$ of 136 and 106 meV, respectively, at zero applied field.

The above multilayer structure was then processed in circular mesas (350 $\mu$m diameter). Ohmic contacts were provided to the two $n^+$GaInAs layers, and the samples cleaved in narrow strips. The cleaved edges were polished at 45° to provide a two-pass waveguide for the pump beam. The pump beam, after entering the structure at normal incidence at one of the polished edges, traverses the superlattice, is reflected at the top surface of the mesa and passes a second time through the multilayers- The described means for coupling the pump radiation into the layer structure are exemplary only, and those skilled in the art will readily be able to devise other coupling arrangements.

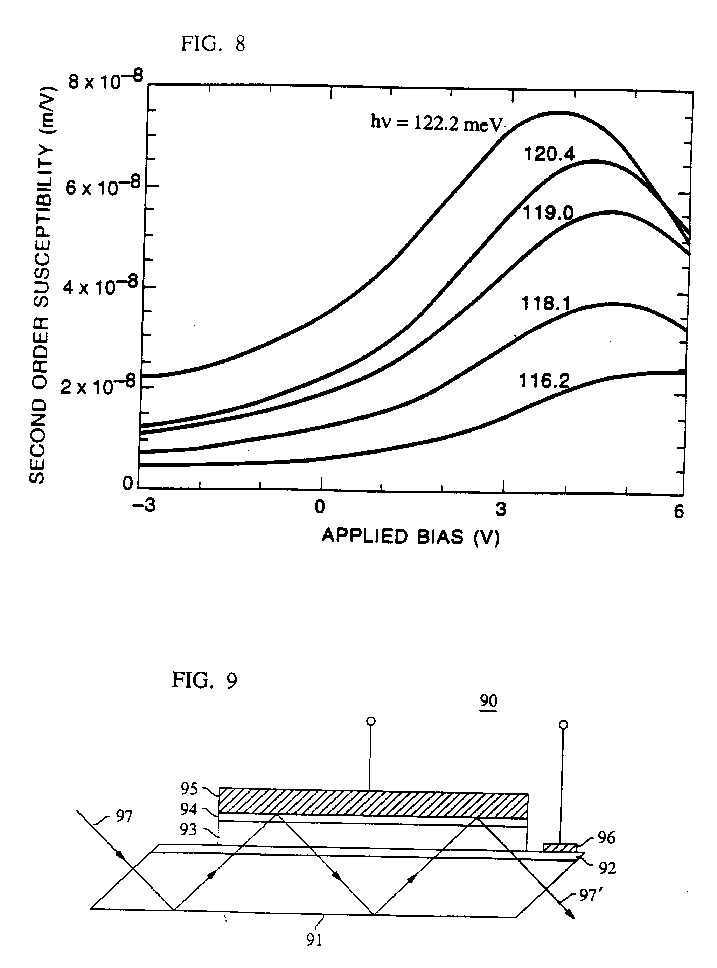

FIG. 9 schematically depicts an exemplary device 90 according to the invention, wherein 91 designates a semiconductor substrate of low conductivity, 92 and 94 semiconductor contact layers of high conductivity, 93 a periodic layer structure as described above, and 95 and 96 metalization layers that facilitate application of a bias voltage across 93. Radiation 97 (of wavelength $\lambda$) enters 91 as shown, and makes several passes through 93 before exiting the device. Exemplarily, radiation 97' comprises radiation of wavelength $\lambda$ as well as second harmonic radiation of wavelength $\lambda/2$. These can be separated by known means, not shown. As those skilled in the art will appreciate, input beam 97 is polarized such that its electric field vector has a, preferably large, component normal to the layer structure 93, and the substrate has to be substantially transparent to radiation of wavelength $\lambda$ and $\lambda/2$.

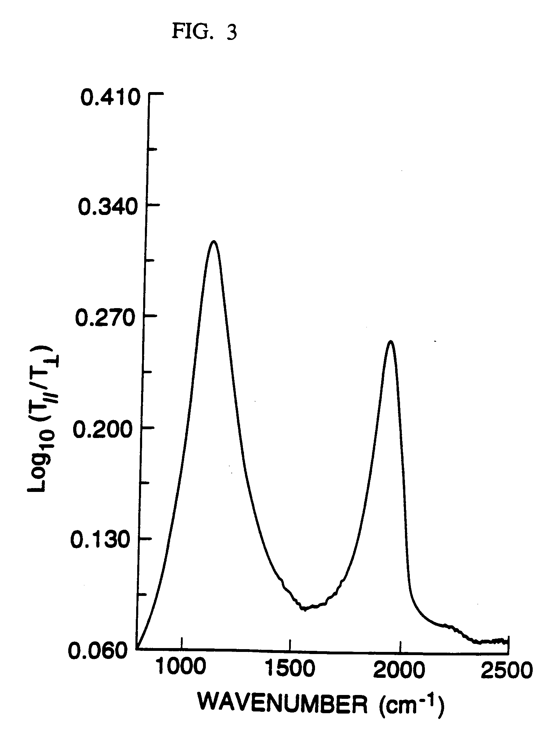

The absorbance (= - $\log_{10}$ transmission) spectrum of an exemplary embodiment of the invention is shown in FIG. 3, wherein the peaks at 1107 and 1921 cm$^{-1}$ are due to the 1 $\rightarrow$ 2 and 1 $\rightarrow$ 3 transitions, respectively.

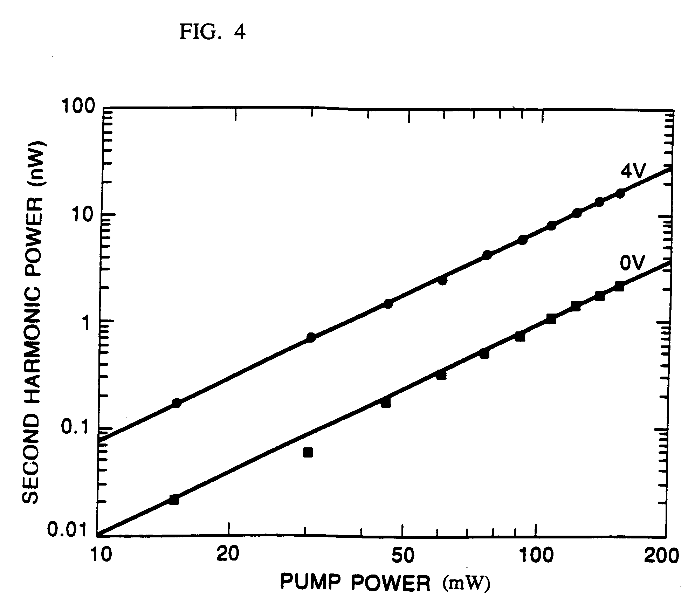

FIG. 4 shows data on second harmonic power as a function of pump power ($\lambda = 10.6$ $\mu$m), for the above described exemplary embodiment, without applied DC electric field, and with 4 volts applied to the device. Positive polarity of the applied field corresponds to that field direction which "lowers" the thin quantum well with respect to the thick well. Application of the appropriate electric field resulted in greatly enhanced SHG. The data shows the expected quadratic dependence on pump power. Instrumental to the resonant enhancement of SHG is the fact that in relevant devices according to the invention the $1 \rightarrow 2$ and $2 \rightarrow 3$ transitions can be strongly Stark shifted in opposite directions in energy, by an amount that is at least approximately equal to the potential drop between the centers of the two wells. As a result, the condition $\Delta E_{12} = \Delta E_{23}$ can be attained by application of an electric field across the layer structure. In preferred embodiments the equality is obtained for a value of $\Delta E_{12}$ such that $\Delta E_{12} \sim h\nu$, typically within $\pm 10 \%$ of $h\nu$. It will be appreciated that for modulators the relevant condition is $h\nu = \Delta E_{12}$.

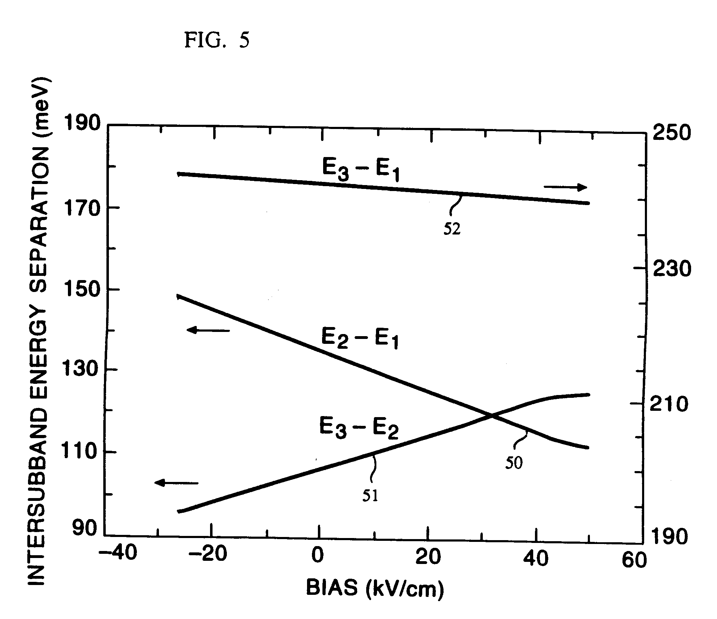

FIG. 5 shows the calculated dependence of $\Delta E_{12}$, $\Delta E_{23}$ and $\Delta E_{31}$ on the bias field, for the above described exemplary embodiment. As can be seen, $\Delta E_{12}$ and $\Delta E_{23}$ depend relatively strongly on the bias field, whereas $\Delta E_{31}$ depends relatively weakly thereon. This is a significant feature of the relevant embodiments of the invention that facilitates efficient modulation of radiation, tuning and detuning of SHG and, possibly, other non-linear effects.

The above disclosed feature is due to the fact that the first and third states are substantially confined by the thick well while the second state is substantially confined by the thin well (see FIG. 2). It is well known that within a first order approximation the bound state energy of a quantum well with respect to the well center is independent of the electric field as long as the potential drop across the well is small compared to the bound state energy. Thus, as the electric field is increased, the first and third energy levels track the center of the thick well while the second energy level tracks the center of the thin well. The net effect is that the energy of the $1 \rightarrow 3$ transition is weakly dependent on the electric field whereas the energies of the $1 \rightarrow 2$ and $2 \rightarrow 3$ transitions are shifted by an amount essentially equal to the potential drop between the centers. This discussion is offered as a possible aid to understanding of the physics of the inventive device and is not intended to be limiting in any way.

As mentioned above, it is usually desirable that the dipole matrix elements of the relevant transitions ($<z_{12}$, $<z_{23}$, $<z_{31}$) be relatively large ($>0.3$ nm, preferably $>0.5$ or $1.0$ nm). It is also typically desirable that the product of the matrix elements be large, typically at least 75% of the mathematical maximum of the product, desirably essentially 100% of the mathematical maximum. Techniques for calculating the matrix elements and for maximizing their product are known. In the above described exemplary embodiment the calculated values of the matrix elements were 1.54, 2.23 and 1.21 nm, respectively.

Devices according to the invention can be embodied in any appropriate semiconductor system. Exemplarily it can be embodied in a III-V system such as AlGaAs/GaAs or, preferably, an In-containing system such as AlInAs/GaInAs. The latter has advantages over the former due to its lower electron effective mass. Other exemplary III-V semiconductor systems that may be useful in the practice of the invention are $Al_xGa_{1-x}$ Sb/GaSb, InP/GaInAs, and $Hg_{1-x}$ $Cd_x$ Te/$Hg_{1-y}$ $Cd_y$Te.

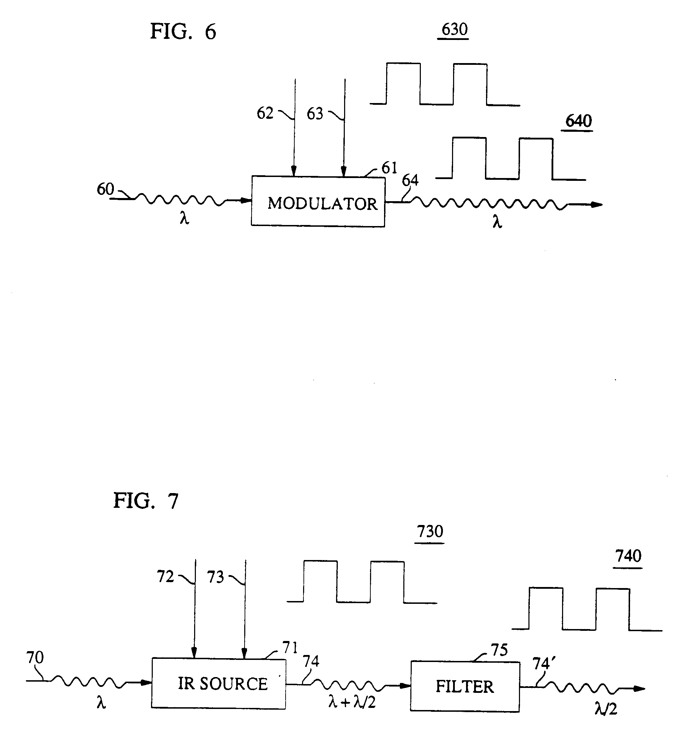

FIG. 6 schematically depicts an exemplary embodiment of the invention, namely, an optical modulator 61. Radiation of wavelength $\lambda$ (e.g., 10.6 $\mu$m) is coupled into 61 by means not shown and propagates therethrough. An optional DC voltage 62 is applied to bias the device near the resonance condition ($h\nu = \Delta E_{12}$), and modulating voltage 63 (having exemplary waveform 630) brings the device into and out of resonance, resulting in switching of output beam 64 (of wavelength $\lambda$) such that waveform 640 of 64 is determined by 63.

Whereas a modulator of the above type requires only first and second energy levels, another modulator according to the invention requires first, second and third energy levels, and furthermore requires two input beams that diameter in wavelength, selected such that the photon energy of one of the beams is equal to $\Delta E_{12}$, and that of the other beam is equal to $\Delta E_{23}$. It will be understood that, at least in principle, this modulator need not comprise means for field tuning. However, for practical reasons it will typically be desirable to provide such means, such that the desired resonance conditions can be established with the aid of a bias voltage. Those skilled in the art will appreciate that the attenuation of the second beam depends on the number of carriers in the second energy level. This number will be essentially zero if the first beam is off, and can be high if the first beam is on. This modulator thus can serve as an all optical logic gate. Exemplarily, the output of the gate is "high" (i.e. second beam output radiation is above some threshold value) only if the first beam radiation is "low" (i.e., off) and the second beam input radiation is "high" (i.e., on).

For use in logic operations, it will generally be desirable that $\Delta E_{12}$ not be equal to $\Delta E_{23}$, so as to allow independent control of the second beam by the first via the population of the second state. However, in this embodiment the output of one logic gate would not be able to control an identical logic gate. However, in appropriate devices according to the invention the energy differences $\Delta E_{12}$ and $\Delta E_{23}$ can be reversed by means of a DC bias. Thus, inventive logic gates can be cascaded by, e.g., alternation of devices with $\Delta E_{12}$ and $\Delta E_{23}$ exchanged.

FIG. 7 schematically depicts another exemplary embodiment of the invention, namely, an IR radiation source 71. Pump radiation of wavelength $\lambda$ (e.g., 10.6 $\mu$m) is coupled into 71 by means not shown and propagates therethrough. An optional DC voltage 72 is applied to bias the device near resonance, and switching voltage 73 (having exemplary waveform 730) brings the device into and out of resonance, resulting in switching on and off of second harmonic radiation of wavelength $\lambda/2$. Exiting beam 74 contains both pump radiation and second harmonic radiation. The former is removed by means of filter 75, such that beam 74' consists of radiation of wavelength $\lambda/2$, whose waveform 740 is determined by 73. It will be appreciated that the quantity $\chi^{(2)}/\alpha(2\nu)$ is a figure of merit for a second harmonic generator, where $\alpha(2\nu)$ is the absorption constant for the second harmonic radiation. Since $\alpha(2\nu)$ depends on the number of carriers in the first energy level, it will usually be desirable to keep that number relatively low, exemplarily < $5 \times 10^{17}$ cm$^{-3}$.

FIG. 8 shows the second order susceptibility as a function of bias voltage, for several pump wavelengths. The peaks correspond to $\Delta E_{12} = h\nu$, with the highest peak further approximately satisfying $\Delta E_{23} = h\nu$. The data was obtained from a device as described above. From the data a Stark shift value of about 4 meV/ 10kV·cm$^{-1}$ can be deduced.

## Claims

1. An article comprising a heteroepitaxial semiconductor body that comprises a combination of layers comprising, in sequence,
   a) a first semiconductor barrier layer,
   b) a first semiconductor quantum well layer of thickness $t_{w1}$;
   c) a second semiconductor barrier layer of thickness $t_b$;
   d) a second semiconductor quantum well layer of thickness $t_{w2}$; and
   e) a third semiconductor barrier layer;
   associated with each of said layers being a band edge, with the band edge of each of said barrier layers being higher than the band edge of each of said quantum well layers; at least one of said layers comprising dopant atoms adapted to provide mobile charge carriers to at least one of said quantum well layers;
   CHARACTERIZED IN THAT
   f) the article comprises means for applying an electric field across said layers, and further comprises means for coupling electromagnetic radiation of wavelength $\lambda$ into the semiconductor body;
   g) $t_{w1} > t_{w2}$; and $t_b < 20$nm;
   h) $t_b$ furthermore is selected such that said mobile charge carriers can tunnel between said first and second quantum wells, $t_{w1}$ and $t_{w2}$ are furthermore selected such that associated with the first and second quantum wells are first and second energy levels for the mobile charge carriers, respectively, the first and second energy levels being higher in energy than the first quantum well band edge by an amount $E_1$ and $E_2$, respectively with $E_2$

> $E_1$, with $E_2 - E_1 = \Delta E_{12}$ differing from $h\nu$ by at most $0.3\Delta E_{12}$, where h is Planck's constant and $\nu = c/\lambda$, where c is the speed of light;
   i) the thicknesses of the first and third barrier layers are selected such that essentially no said mobile charge carriers can tunnel through said first and third barrier layers; and
   j) associated with said combination of layers is a dipole matrix element <$z_{12}$ > that is associated with the mobile charge carrier optical transition from the first to the second energy level, with $t_{w1}$, $t_{w2}$ and $t_b$ furthermore selected such that <$z_{12}$ is greater than 0.3 nm.

2. The article of claim 1, wherein the semiconductor body is a III-V semiconductor body, the dopant atoms are selected such that the mobile charge carriers are electrons, the band edges are conduction band edges, with the conduction band edges of said first, second and third barrier layers being essentially equal in energy, with the conduction band edges of said first and second quantum well layers also being essentially equal in energy, and with $t_b \leqq 10$nm.

3. The article of claim 2, wherein the semiconductor body comprises an essentially periodic multiplicity of said combination of layers.

4. The article of claim 3, wherein for a given said combination of layers $t_{w1}$ and $t_{w2}$ are selected such that associated with the first quantum well layer is a third energy level for the mobile electrons, with the third energy level being higher in energy than the first quantum well band edge by an amount $E_3$, with $E_3 > E_2$, with $E_3 - E_2 = \Delta E_{23}$ differing from $h\nu$ by at most $0.3\Delta E_{23}$.

5. The article of claim 4, wherein associated with a given combination of layers are further dipole matrix elements <$z_{23}$ > and <$z_{31}$ > that are associated with electron transitions from the second to the third, and the third to the first energy level, respectively, wherein $t_{w1}$, $t_{w2}$ and $t_b$ are selected such that each of <$z_{23}$ > and <$z_{31}$ > is greater than about 0.3 nm.

6. The article of claim 5, wherein $t_{w1}$, $t_{w2}$ and $t_b$ are selected such that the product of <$z_{12}$ >, <$z_{23}$ > and <$z_{31}$ > is greater than 75% of the mathematical maximum of said product.

7. The article of claim 6, wherein $t_{w1}$, $t_{w2}$ and $t_b$ are selected such that the product of <$z_{12}$, <$z_{23}$ and <$z_{32}$ is essentially equal to the mathematical maximum of said product.

8. The article of claim 1, wherein $\lambda$ is in the approx-

imate range 3- 100 $\mu$m, wherein $t_{w1}$ and $t_{w2}$ are selected such that associated with the first quantum well is a third energy level for the mobile charge carriers, with the third energy level being higher in energy than the first quantum well band edge by an amount $E_3$, with $E_3 > E_2$, and with $E_3 - E_2 = \Delta E_{23}$ differing from $h\nu$ by at most $0.3\Delta E_{23}$, wherein the article is adapted for use as a source of electromagnetic radiation of wavelength $\lambda/2$.

9. The article of claim 1, wherein $\lambda$ is in the approximate range 3- 100 $\mu$m, and wherein the article is adapted for use as a modulator of the radiation of wavelength $\lambda$.

10. The article of claim 1, comprising means for coupling second electromagnetic radiation of wavelength $\lambda'$ into the semiconductor body, wherein both $\lambda$ and $\lambda'$ are in the approximate range 3 - 100 $\mu$m, $\lambda$ is different from $\lambda'$, $t_{w1}$ and $t_{w2}$ are selected such that associated with the first quantum well is a third energy level for the mobile charge carriers, with the third energy level being higher in energy than the first quantum well band edge by an amount $E_3$, with $E_3 > E_2$, and with $E_3 - E_2 = \Delta E_{23}$ differing from $h\nu'$ by at most $0.3\Delta E_{23}$, where $\lambda' = c/\lambda'$, and wherein the article is adapted for use as a modulator of the second electromagnetic radiation.

11. The article of claim 1, wherein the combination of layers consists of said two quantum well layers and said three barrier layers.

12. The article of claim 3, wherein a given combination of layers consists of said two quantum well layers and said three barrier layers, said given combination having a lower and an upper neighboring combination, with one of said first and third barrier layers shared between the given combination and its lower neighboring combination, and with the other of said first and third barrier layers shared between the given combination and its upper neighboring combination.

FIG. 1

FIG. 2

FIG. 3

FIG. 4

FIG. 5

FIG. 6

FIG. 7

FIG. 8

FIG. 9

European Patent
Office

**EUROPEAN SEARCH REPORT**

Application Number

EP    92 30 7806
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | PROCEEDINGS OF THE 18TH INT. SYMP. ON GAAS AND RELATED COMPOUNDS, September 1991, SEATTLE US<br>pages 625 - 630 , XP000270680<br>C. SIRTORI ET AL. 'Second harmonic generation in AlInAs/GaInAs asymmetric coupled quantum wells'<br>* the whole document *<br>--- | 1-9, 11-12 | G02F1/35<br>G02F1/015<br>G02F1/37<br>G02F3/00 |
| P,X | APPLIED PHYSICS LETTERS.<br>vol. 60, no. 2, January 1992, NEW YORK US<br>pages 151 - 153 , XP000257153<br>C. SIRTORI ET AL. 'Resonant Stark tuning of second-order susceptibility in coupled quantum wells'<br>* the whole document *<br>--- | 1-9, 11-12 | |
| P,X | APPLIED PHYSICS LETTERS.<br>vol. 59, no. 18, October 1991, NEW YORK US<br>pages 2302 - 2304 , XP000257769<br>C. SIRTORI ET AL. 'Observation of large second order susceptibility via intersubband transitions at lambda = 10 microns in asymmetric coupled AlInAs/GaInAs quantum wells'<br>* the whole document *<br>--- | 1-8, 11-12 | TECHNICAL FIELDS SEARCHED (Int. Cl.5)<br><br>G02F |
| A | APPLIED PHYSICS LETTERS.<br>vol. 51, no. 25, December 1987, NEW YORK US<br>pages 2100 - 2102<br>J. KHURGIN 'Second-order susceptibility of asymmetric coupled quantum well structures'<br>* the whole document *<br>--- | 1-3,6-8, 11-12 | |

-/--

The present search report has been drawn up for all claims

| Place of search | Date of completion of the search | Examiner |
|---|---|---|
| THE HAGUE | 17 DECEMBER 1992 | IASEVOLI R. |

EPO FORM 1503 03.82 (P0401)

14

**European Patent Office**

**EUROPEAN SEARCH REPORT**

Application Number

EP 92 30 7806
Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A,D | ELECTRONICS LETTERS. vol. 26, no. 16, August 1989, STEVENAGE GB pages 1063 - 1065 , XP000071918 E. ROSENCHER ET AL. 'Second Harmonic Generation by Intersub-Band Transitions in Compositionally Asymmetrical MQWs' * the whole document * | 1-8 | |
| A | GB-A-2 227 571 (THOMSON-CSF) * page 3, line 19 - page 4, line 36 * * page 5, line 24 - line 29 * * page 6, line 22 - page 10, line 35 * * page 12, line 30 - page 13, line 18 * * claims 1-2,4,11-13; figures 2-3,7-10 * | 1-4,9-12 | |

TECHNICAL FIELDS
SEARCHED (Int. Cl.5 )

The present search report has been drawn up for all claims

| Place of search | Date of completion of the search | Examiner |
|---|---|---|
| THE HAGUE | 17 DECEMBER 1992 | IASEVOLI R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document